(19) **Europäisches Patentamt / European Patent Office / Office européen des brevets**

(11) **EP 2 880 756 B1**

(12) **FASCICULE DE BREVET EUROPEEN**

(45) Date de publication et mention de la délivrance du brevet:
**28.06.2017 Bulletin 2017/26**

(21) Numéro de dépôt: **13756597.4**

(22) Date de dépôt: **25.07.2013**

(51) Int Cl.:
*H02P 21/22* (2016.01)     *H02P 6/10* (2006.01)
*H02P 21/05* (2006.01)

(86) Numéro de dépôt international:
**PCT/FR2013/051788**

(87) Numéro de publication internationale:
**WO 2014/023888 (13.02.2014 Gazette 2014/07)**

(54) **SYSTÈME DE COMMANDE DU COUPLE ÉLECTROMAGNÉTIQUE D'UNE MACHINE ÉLECTRIQUE NOTAMMENT POUR VÉHICULE AUTOMOBILE**

SYSTEM ZUR STEUERUNG DES ELEKTROMAGNETISCHEN DREHMOMENTS EINER ELEKTRISCHEN MASCHINE, INSBESONDERE FÜR KRAFTFAHRZEUGE

SYSTEM FOR CONTROLLING THE ELECTROMAGNETIC TORQUE OF AN ELECTRIC MACHINE IN PARTICULAR FOR MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.08.2012 FR 1257616**

(43) Date de publication de la demande:
**10.06.2015 Bulletin 2015/24**

(73) Titulaire: **Renault S.A.S.**
**92100 Boulogne-Billancourt (FR)**

(72) Inventeurs:
• **MALOUM, Abdelmalek**
**94550 Chevilly-Larue (FR)**
• **MERIENNE, Ludovic**
**91190 Gif-sur-Yvette (FR)**

(56) Documents cités:
**FR-A1- 2 919 772     US-A1- 2009 251 096**
**US-A1- 2011 175 556**

Printed by Jouve, 75001 PARIS (FR)

**Description**

L'invention concerne un procédé de commande d'un couple électromagnétique d'une transmission d'un véhicule automobile muni d'une machine électrique d'entraînement, et notamment d'une transmission hybride d'un véhicule automobile muni d'un moteur thermique et d'une machine électrique d'entraînement.

Une transmission hybride comprend généralement deux arbres primaires concentriques portant chacun au moins un pignon de descente sur un arbre secondaire relié aux roues du véhicule et, un premier moyen de couplage entre les deux arbres primaires pouvant occuper trois positions : une première dans laquelle le moteur thermique est découplé de la chaîne cinématique reliant la machine électrique aux roues, une seconde dans laquelle le moteur thermique entraîne les roues indépendamment de la machine électrique, et une troisième dans laquelle le moteur thermique et la machine électrique sont couplés de manière à additionner en direction des roues leurs couples respectifs.

Il y a également trois positions pour relier l'arbre primaire lié au moteur électrique avec l'arbre secondaire : une première dans laquelle le moteur électrique n'est pas directement couplé au secondaire, une seconde dans laquelle le moteur électrique est directement lié au secondaire avec un premier rapport, et une troisième dans laquelle le moteur électrique est directement lié au secondaire avec un second rapport.

Dans le cas où seule la machine électrique fournit le couple de traction au véhicule automobile, c'est-à-dire dans un cas de traction purement électrique comme dans un véhicule automobile à traction purement électrique, le couple fourni par la machine électrique doit être contrôlé. Le couple d'une machine électrique étant directement lié aux courants circulant dans celle-ci, ces courants doivent être commandés de façon précise.

Dans une machine électrique, notamment une machine synchrone triphasée à aimants permanents et à flux axial, les courants dans les trois phases du stator sont sinusoïdaux et déphasés chacun de $\frac{2\pi}{3} rad$. Ces courants créent un champ magnétique tournant dans la machine électrique. Le rotor est composé d'aimants permanents, par exemple entre 1 et 5 paires de pôles. Comme une boussole, le rotor s'aligne naturellement sur le champ magnétique tournant créé par le rotor. Ainsi, la fréquence de rotation du rotor est égale à la fréquence des courants du stator (synchrone). Ce sont les amplitudes des courants du stator et la puissance des aimants du rotor qui crée le couple nécessaire à la rotation de la machine. Pour commander ces courants, il faut donc appliquer à chaque phase du stator des tensions sinusoïdales déphasées de $\frac{2\pi}{3} rad$ chacune également.

Généralement, il est plus simple d'appliquer une régulation sur des constantes que sur des signaux sinusoïdaux. Une transformée des systèmes triphasées telle que la transformée de Park est généralement utilisée pour projeter un système triphasé sur un espace bidimensionnel afin de se retrouver avec un système monophasé équivalent. Il est ainsi possible de transposer les trois courants et les trois tensions sinusoïdales du stator relatives aux trois phases d'un système triphasé dans un espace où les trois signaux sinusoïdaux de courant ou de tension s'expriment sous la forme de deux signaux constants de courant ou de tension, l'un sur l'axe direct $X_d$ et l'autre sur l'axe en quadrature $X_q$. Pour cela, le repère de Park s'appui sur un repère lié au champ tournant, soit dans le cas de la machine synchrone à un repère lié au rotor.

En travaillant avec des courants et des tensions exprimées dans l'espace de Park, il est ainsi possible d'agir sur des courants ou des tensions constantes plutôt que des signaux sinusoïdaux pour réguler la machine triphasée à commander.

En faisant la transformée inverse, il est possible de se ramener au repère normal de la machine et donc de savoir exactement quelles tensions ou quels courants appliquer sur chaque phase de la machine.

L'utilisation d'une batterie comme alimentation de la machine électrique triphasée impose des contraintes supplémentaires en ce que les tensions applicables sont limitées par les capacités de la batterie. Il n'est en effet pas possible d'atteindre certaines consignes à cause de ces limitations. Une consigne en dehors de l'espace atteignable est souvent génératrice d'instabilité.

Un objectif de l'invention est d'assurer la stabilité des courants dans la machine lors de sa régulation malgré les limitations en tension. Si, avec ces contraintes, les consignes restent inatteignables alors l'objectif est alors de se rapprocher au maximum de la consigne.

Le document FR2919772 décrit un procédé de commande d'une machine synchrone à aimants permanents dans laquelle la saturation est évitée en modifiant le fonctionnement du module de modulation de largeur de phase (PWM) assurant les tensions sur chaque branche du moteur. Dans ce procédé de commande connu, le couple électromagnétique accessible par la machine synchrone est réduit afin d'éviter la saturation en tension, notamment en commandant directement une composante de courant dans l'espace de Park.

En général, pour commander la composante quadratique de courant, on utilise une cartographie donnant la composante directe du courant en fonction de la consigne de composante quadratique à atteindre. Cette méthode présente le désavantage de devoir faire une campagne de mise au point des cartographies des courants. De plus, rien ne permet d'assurer l'obtention de courants optimaux pour un couple électromagnétique donné. En effet, avec cette méthode cartographique, pour s'assurer de ne pas entrer dans des conditions de saturation de tension, on prévoit une marge de sécurité sur la valeur de la composante directe de courant, c'est-à-dire que la composante directe de courant est diminuée plus que nécessaire afin de ne pas risquer de voir des saturations en commande du système. Cette marge de sécurité se fait au détriment du rendement de la machine.

Une telle réduction de la composante directe du courant implique une réduction des tensions et donc une diminution du couple électromagnétique accessible.

L'invention se propose de fournir un procédé de commande du couple électromagnétique d'une machine électrique à aimants permanents permettant d'assurer la stabilité des courants dans la machine électrique quelque soit le régime de la machine électrique et avec des gains constants prédéterminés du régulateur.

Selon un aspect de l'invention, il est proposé dans un mode de réalisation un système de commande du couple électromagnétique d'une machine électrique triphasée à aimants permanents, comprenant des moyens de mesure du courant délivré sur les trois phases de la machine, des moyens de transposition aptes à transposer les trois courants mesurés en une composante directe et une composante quadratique de courant à partir d'une transformée des systèmes triphasés, des moyens de transformation aptes à convertir une consigne de couple en une consigne pour la composante quadratique de courant et une consigne pour la composante directe de courant, des moyens de détermination des tensions de commande, et des moyens de commande aptes à appliquer les tensions de commande déterminées à la machine électrique.

Selon une caractéristique générale de l'invention, les moyens de détermination comprennent un premier module de calcul recevant lesdites composantes directes et quadratique de courant ainsi que lesdites consignes, le premier module de calcul étant apte à appliquer un changement de variables et à fournir un ensemble de variables de commande à un module de régulation apte à délivrer des paramètres de commandes calculés à partir d'un système d'équations en fonction des variables de commande, le système d'équations isolant les termes de perturbations dues au flux généré par les aimants du rotor de la machine électrique des termes contribuant au couple électromagnétique, et un second module de calcul apte à calculer les tensions de commande à partir des composantes directe et quadratique de tension déterminées à partir des paramètres de commande.

Le changement de variable permet de transformer le système d'équation régulant le couple électromagnétique exprimé dans l'espace de Park en un système d'équations comprenant des variables endogènes propre au couple électromagnétique et des variables exogènes propres aux perturbations dues au flux. Ce changement de variable permet ainsi d'isoler en fréquence les perturbations de la commande du couple électromagnétique et ainsi de compenser les perturbations.

Ce système de commande permet également de diminuer les ondulations de courant de la machine électrique, et ainsi de lisser le couple électromagnétique de la machine électrique.

La transformée des systèmes triphasés peut être une transformée de Park. Elle peut également être une transformée de Fortescue, une transformée de Clarke, ou une transformée de Ku.

Dans l'espace de Park, les variables comprennent une composante directe et une composante quadratique appliquées sur les deux axes du plan de Park (axe directe et axe en quadrature) de la machine synchrone. Les composantes directe et quadratique de tension s'expriment en fonction de la composante directe et de la composante quadratique du courant de la machine synchrone.

Avantageusement, la machine synchrone possède une symétrie entre l'axe direct et l'axe en quadrature du plan de la transformée des systèmes triphasés permettant d'obtenir une composante directe d'inductance équivalente sensiblement équivalente à la composante quadratique d'inductance équivalente.

Cette symétrie peut être obtenue lors de la fabrication de la machine électrique en utilisant des pôles lisses et non saillant. Elle permet d'exprimer le couple électromagnétique de la machine électrique en fonction d'un facteur unique de flux dû aux aimants de la machine électrique.

Dans l'espace de Park, le système d'équations à réguler s'exprime à partir des variables de commande selon l'expression :

$$\begin{cases} U_d = R_s X_d + \dfrac{L_s}{3} \dot{X}_d + P_d(t) \\[2mm] U_q = R_s X_q + L_q \dot{X}_q + P_q(t) \end{cases}$$

Avec $L_s=L_d=L_q$ une inductance équivalente, et $R_s=R_d=R_q$ une résistance équivalente, $X_d = I_q^3 + I_d^3$ et $X_q$

$=I_q\text{-}I_d$, $I_d$ représentant la composante directe du courant délivré par la machine électrique et $I_q$ sa composante quadratique, et $U_d = I_d^2 V_d + I_q^2 V_q$ et $U_q = -V_d + V_q$, $V_d$ représentant la composante directe de la tension aux bornes de la machine électrique et $V_q$ sa composante quadratique.

$$P_d(t) = -\omega_r I_q \left\lfloor L_s I_d (I_q - I_d) + \phi_f \right\rfloor \qquad \text{et} \qquad P_q(t) = \omega_r \left\lfloor L_s (I_d + I_q) + \phi_f \right\rfloor$$

correspondent respectivement à la composante directe et à la composante quadratique des perturbations exprimées dans l'espace de Park, $\phi_f$ représentant le flux généré par les aimants de la machine, et $\omega_r$ représentant la vitesse de rotation du champ magnétique de la machine.

Les paramètres de commande, à partir desquels sont déterminés les composantes quadratique et directe de tension puis les tensions de commande, sont calculés à partir de l'expression :

$$\begin{cases} U_d = K_d \left( \hat{X}_d^{req} - X_d \right) + K_{id} \int \left( \hat{X}_d^{req} - X_d \right) dt \\ U_q = K_q \left( X_q^{req} - X_q \right) + K_{iq} \int \left( X_q^{req} - X_q \right) dt \end{cases}$$

Avec $K_d$, $K_{id}$, $K_q$, $K_{iq}$ représentant des gains constants prédéterminés, et $X_d^{req} = \left( I_q^{req} \right)^3 + \left( I_d^{req} \right)^3$ et $X_q^{req} = I_q^{req} - I_d^{req}$, $I_d^{req}$ représentant la consigne de courant de la composante directe et $I_q^{req}$ représentant la consigne de courant de la composante quadratique.

Selon un autre aspect de l'invention, il est proposé dans un mode de mise en oeuvre un procédé de commande du couple électromagnétique d'une machine électrique triphasée à aimants permanents, comprenant la mesure du courant délivré sur les trois phases de la machine électrique, une transposition des trois courants mesurés en une composante directe et une composante quadratique de courant à partir d'une transformée des systèmes triphasés, la réception de deux consignes pour la composante quadratique et la composante directe de courant dans le plan lié à la transformée des systèmes triphasés, une détermination des tensions de commande, et une commande des tensions à appliquer à la machine électrique, caractérisé en ce que la détermination des tensions de commande comprend un changement de variable fournissant des variables de commande, une régulation des paramètres de commandes calculés à partir d'un système d'équations exprimé en fonction des variables de commande, le système d'équations isolant les termes de perturbations dues au flux généré par les aimants du rotor de la machine électrique des termes contribuant au couple électromagnétique, et un calcul des tensions de commande à partir des composantes directe et quadratique de tension déterminées à partir des paramètres de commande.

D'autres avantages et caractéristiques de l'invention apparaîtront à l'examen de la description détaillée d'un mode de mise en oeuvre et d'un mode de réalisation, nullement limitatifs, et des dessins annexés, sur lesquels :

- la figure 1 présente un organigramme d'un procédé de commande du couple électromagnétique d'une machine électrique triphasée à aimants permanents selon un mode de mise en oeuvre :
- la figure 2 illustre, de manière schématique, un système de commande du couple électromagnétique d'une machine électrique triphasée à aimants permanents selon un mode de réalisation de l'invention.

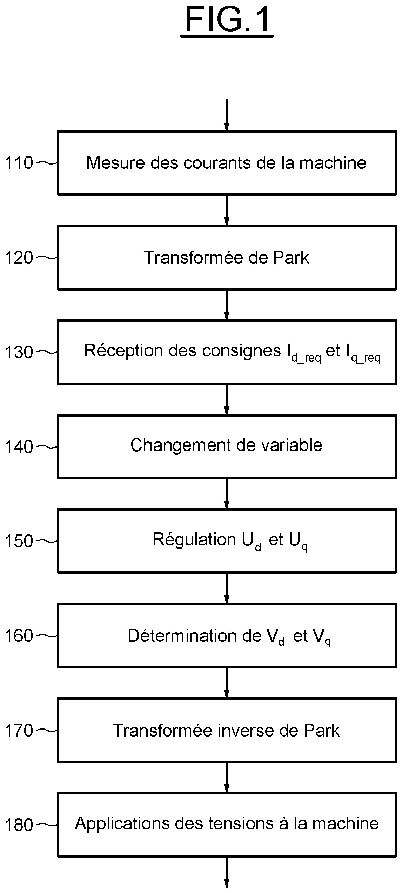

Sur la figure 1, est représenté un organigramme, selon un mode de mise en oeuvre de l'invention, d'un procédé de commande du couple électromagnétique d'une machine synchrone triphasée à aimants permanent.

Dans une première étape 110, on mesure le courant $I_1$, $I_2$, $I_3$ pour chacune des trois phases de la machine synchrone triphasée à aimants permanents.

Dans une seconde étape 120, on applique la transformée de Park aux trois courants mesurés $I_1$, $I_2$, $I_3$ de manière à exprimer le courant délivré par la machine électrique dans un repère tournant selon une composante directe $I_d$ de courant et une composante quadratique $I_q$ de courant.

Dans l'espace de Park, le système d'équations à commander pour la machine synchrone est le suivant :

$$\begin{cases} V_d = R_s I_d + L_d \dot{I}_d - \omega_r L_q I_q \\ V_q = R_s I_q + L_q \dot{I}_q - \omega_r \left( L_d I_d + \phi_f \right) \end{cases} \quad (1)$$

Avec $V_d$ et $V_q$ les tensions appliquées sur les deux axes respectivement direct et en quadrature du plan de Park de la machine électrique, $I_d$ et $I_q$ les courants circulant dans la machine sur les deux axes respectivement direct et en quadrature du plan de Park, $R_s$ la résistance équivalente du stator de la machine, $L_d$ et $L_q$ les inductances équivalentes sur chaque axe respectivement direct et en quadrature du plan de Park de la machine, $\omega_r$ la vitesse de rotation du champ magnétique de la machine qui équivaut à la vitesse de rotation du rotor multipliée par le nombre de paires de pôles de la machine, et $\phi_f$ le flux généré par les aimants du rotor.

Le couple électromagnétique généré par la machine synchrone peut se calculer à partir de l'expression suivante :

$$C_{em} = p \left( \phi_d I_q - \phi_q I_d \right) \quad (2)$$

Avec $C_{em}$ le couple électromagnétique généré par la *machine, p* le nombre de paires de pôles du rotor de la machine, et $\phi_d$ et $\phi_q$ les composantes du flux généré sur les axes respectivement direct et en quadrature de la machine qui s'expriment sous la forme :

$$\phi_d = L_d I_d + \bar{\phi}_f \text{ et } \bar{\phi}_q = L_q I_q \quad (3)$$

Dans le cas présent, la machine synchrone possède une symétrie entre l'axe direct et l'axe en quadrature de l'espace de Park qui permet d'obtenir la propriété remarquable $L_d = L_q$, et ainsi d'écrire

$$C_{em} = p \phi_f I_q \quad (4)$$

Dans une telle machine, pour commander le couple en limitant au maximum les pertes Joules générées par la composante directe $I_d$ du courant, il faut s'arranger pour avoir une composante directe $I_d$ du courant la plus proche de zéro, car seule la composante quadratique $I_q$ contribue au couple électromagnétique.

Dans une étape 130, on reçoit une première consigne $I_{q\_req}$ pour la composante quadratique $I_q$ de courant et une seconde consigne $I_{d\_req}$ pour la composante directe $I_d$ de courant dans le plan lié à la transformée des système triphasés.

Dans une étape suivante 140, on applique un changement de variables en posant :

$$\begin{aligned} X_d &= I_q^3 + I_d^3 \\ X_d &= I_q - I_d \\ L_s &= L_q = L_d \end{aligned} \quad (5)$$

Ce qui permet d'exprimer le système de commande (1) sous la forme :

$$\begin{cases} I_d^2 V_d + I_q^2 V_q = R_s X_d + \dfrac{L_s}{3} \dot{X}_d - \omega_r I_q \left[ L_s I_d \left( I_q - I_d \right) + \phi_f \right] \\ -V_d + V_q = R_s X_q + L_q \dot{X}_q + \omega_r \left[ L_s \left( I_d + I_q \right) + \phi_f \right] \end{cases} \quad (6)$$

Par ailleurs, étant donné que $I_d I_q$ $(I_q - I_d)$ $\neq I_d + I_q + I_q \neq X_d \neq X_q$, il est possible d'écrire en posant $U_d = I_d^2 V_d + I_q^2 V_q$ et $U_q = -V_d + V_q$ :

$$\begin{cases} U_d = R_s X_d + \dfrac{L_s}{3} \dot{X}_d + P_d(t) \\ U_q = R_s X_q + L_q \dot{X}_q + P_q(t) \end{cases} \qquad (7)$$

Avec $U_d$ et $U_q$ des paramètres de commandes comprenant chacun respectivement des variables endogènes dépendant des variables $X_q$, $X_d$ ou de sa dérivée permettant de commander le couple électromagnétique $C_{em}$, et une variable exogène $P_q(t)$ ou $P_d(t)$ qui sont des perturbations.

Les variables de perturbations $P_q(t)$ ou $P_d(t)$ étant exogènes, le système (7) permet de réaliser une isolation fréquentielle des perturbations par rapport aux termes régissant le couple électromagnétique.

Ainsi, il est possible de compenser les perturbations et de réguler le couple électromagnétique en réalisant, dans une étape 150, une régulation sur les paramètres de commandes $U_d$ et $U_q$. Cette régulation permet de lisser les ondulations de courant générées par la machine électrique. De plus, le système d'équation (7) montre que la régulation des paramètres de commande $U_d$ et $U_q$ est réalisée sans dépendance du régime du rotor de la machine électrique.

Les valeurs des paramètres de commande $U_d$ et $U_q$ sont calculées à partir du système :

$$\begin{cases} U_d = K_d\left(X_d^{req} - X_d\right) + K_{id}\int\left(X_d^{req} - X_d\right)dt \\ U_q = K_q\left(X_q^{req} - X_q\right) + K_{iq}\int\left(X_q^{req} - X_q\right)dt \end{cases} \qquad (8)$$

Avec $K_d$, $K_{id}$, $K_q$, $K_{iq}$ représentant des gains constants prédéterminés, et $X_d^{req} = \left(I_q^{req}\right)^3 + \left(I_d^{req}\right)^3$ et $X_q^{req} = I_q^{req} - I_d^{req}$.

Dans une étape 160, on détermine les valeurs des composantes de tension $V_d$ et $V_q$ appliquées sur les deux axes respectivement direct et en quadrature du plan de Park de la machine électrique à partir des paramètres de commande $U_d$ et $Uq$ et du système matriciel :

$$\begin{bmatrix} V_d \\ V_q \end{bmatrix} = \begin{bmatrix} I_d^2 & I_q^2 \\ -1 & 1 \end{bmatrix}^{-1} \begin{bmatrix} U_d \\ U_q \end{bmatrix} \qquad (9)$$

On applique ensuite, dans une étape 170, une transformée inverse de Park à partir des composantes directe et quadratique de tension $V_d$ et $V_q$, de manière à obtenir les valeurs des tensions de commande $U_1$, $U_2$, $U_3$ de l'onduleur couplé entre la batterie d'alimentation du véhicule automobile et la machine électrique.

Dans une étape finale 180, on applique aux bornes de la machine électrique les tensions $U_{12}$, $U_{23}$, $U_{31}$ générées par l'onduleur à partir de la tension monophasée $V_{bat}$ de la batterie et des valeurs des tensions de commandes $U_1$, $U_2$, $U_3$.

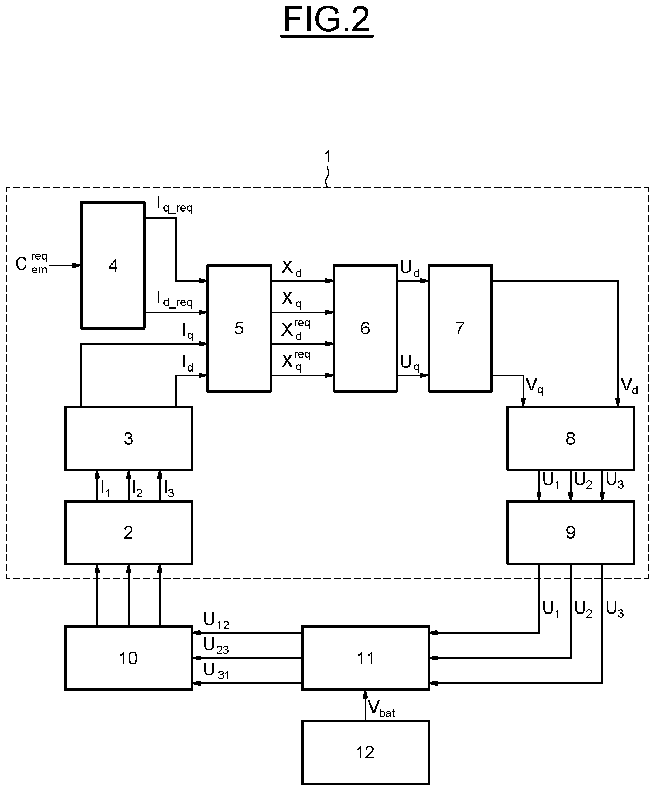

Sur la figure 2 est illustré un système de commande du couple électromagnétique d'une machine électrique triphasée à aimants permanents implémentant le procédé de commande selon l'invention, selon un mode de réalisation de l'invention.

Le système de commande 1 du couple électromagnétique d'une machine synchrone 10 triphasée à aimants permanents comprend des moyens de mesure 2 du courant délivré sur les trois phases $I_1$, $I_2$, $I_3$, de la machine électrique 10. Ces moyens de mesure 2 sont couplés à des moyens de transposition 3 permettant de transposer les trois courants mesurés en une composante directe $I_d$ et une composante quadratique $Iq$ de courant à partir de la transformée de Park. Le système de commande 1 comprend également des moyens de transformation 4 aptes à convertir la consigne de couple $C_{em}^{req}$ en consigne $I_q^{req}$ pour la composante quadratique $I_q$ de courant et en consigne $I_d^{req}$ pour la composante directe $I_d$ de courant, et des premiers moyens de changement de variable 5 aptes à déterminer des nouvelles variables de courant $X_q$ et $X_d$ et de nouvelles consignes de courant $X_d^{req}$ et $X_q^{req}$ à partir des composantes directe et quadratique de courant $I_d$ et $I_q$ et des consignes correspondantes $I_{q\_req}$ et $I_{q\_req}$ et des équations :

$$X_d = I_q^3 + I_d^3 \ \text{et} \ X_q = I_q - I_d,$$

et

$$X_d^{\,req} = \left(I_q^{\,req}\right)^3 + \left(I_d^{\,req}\right)^3 \ \text{et} \ X_q^{\,req} = I_q^{\,req} - I_d^{\,req}.$$

Le système de commande 1 comprend un régulateur 6 apte à déterminer des paramètres de commande $U_d$ et $U_q$ comprenant chacun respectivement des variables endogènes dépendant des variables $X_q$, $X_d$ ou de leur dérivée et permettant de commander le couple électromagnétique $C_{em}$, et une variable exogène $P_q(t)$ ou $P_d(t)$ qui représente des perturbations dues au flux généré par les aimants du rotor, les paramètres de commande $U_d$ et $U_q$ s'exprimant selon le système (7) et étant calculés selon le système (8).

Le système de commande 1 comprend des moyens de détermination 7 des composantes de tension $V_d$ et $V_q$ appliquées sur les deux axes respectivement direct et en quadrature du plan de Park de la machine électrique à partir des paramètres de commande $U_d$ et $U_q$ et du système matriciel (9).

Il comprend des moyens de transposition inverse 8 aptes à appliquer une transformée inverse de Park à partir des composantes directe et quadratique de tension $V_d$ et $V_q$, de manière à obtenir les valeurs des tensions de commande $U_1$, $U_2$, $U_3$ de l'onduleur 11 couplé entre la batterie 12 d'alimentation du véhicule automobile et la machine électrique 10. Il comprend enfin des moyens de commande 9 aptes à commander l'onduleur 11 à partir des valeurs des tensions de commande $U_1$, $U_2$, $U_3$ déterminées.

L'invention permet ainsi de commander le couple électromagnétique d'une machine électrique à aimants permanents en assurant la stabilité des courants dans la machine électrique quelque soit le régime de la machine électrique.

Il est à noter que l'invention est aisément transposable par l'homme du métier à une machine électrique dissymétrique entre l'axe direct et l'axe en quadrature de l'espace de Park et donc pour laquelle $L_d$ est différent de $L_q$, cette transposition s'effectuant en gérant différemment les consignes de courant suivant ces deux axes afin de réaliser les couples demandés.

## Revendications

1.  Système de commande (1) du couple électromagnétique d'une machine électrique (10) triphasée à aimants permanents, comprenant des moyens de mesure (2) du courant délivré sur les trois phases de la machine (10), des moyens de transposition (3) aptes à transposer les trois courants mesurés en une composante directe ($I_d$) et une composante quadratique ($I_q$) de courant à partir d'une transformée des systèmes triphasés, des moyens de transformation (4) aptes à convertir une consigne de couple $\left(C_{em}^{req}\right)$ en une consigne $\left(I_q^{req}\right)$ pour la composante quadratique ($I_q$) de courant et une consigne $\left(I_d^{req}\right)$ pour la composante directe ($I_d$) de courant, des moyens de détermination des tensions de commande ($U_1$, $U_2$, $U_3$), et des moyens de commande (9) aptes à appliquer les tensions de commande ($U_1$, $U_2$, $U_3$) déterminées à la machine électrique (10), **caractérisé en ce que** les moyens de détermination comprennent un premier module de calcul (5) recevant lesdites composantes directes et quadratique ($I_d$, $I_q$) de courant ainsi que lesdites consignes ($I_{q\_req}$ et $I_{d\_req}$), le premier module de calcul (5) étant apte à appliquer un changement de variables et à fournir un ensemble de variables de commande ($X_d$, $X_q$, $X_{q\_req}$, $X_{d\_req}$) à un module de régulation (6) apte à délivrer des paramètres de commandes ($U_d$, $U_q$) calculés à partir d'un système d'équations en fonction des variables de commande ($X_d$, $X_q$, $X_{q\_req}$, $X_{d\_req}$), le système d'équations isolant les termes de perturbations ($P_d$, $P_q$) dues au flux généré par les aimants du rotor de la machine électrique (10) des termes contribuant au couple électromagnétique, et un second module de calcul (8) apte à calculer les tensions de commande ($U_1$, $U_2$, $U_3$) à partir des composantes directe et quadratique de tension ($V_d$, $V_q$) déterminées à partir des paramètres de commande ($U_d$, $U_q$).

2.  Système selon la revendication 1, dans lequel la machine électrique (10) possède une symétrie entre l'axe direct et l'axe en quadrature du plan de la transformée des systèmes triphasés permettant d'obtenir une composante directe ($L_d$) d'inductance équivalente sensiblement équivalente à la composante quadratique ($L_q$) d'inductance équivalente.

3. Système selon l'une des revendications 1 ou 2, comprenant des moyens de transposition (3) aptes à appliquer une transformée de Park aux courants mesurés pour obtenir la composante directe ($I_d$) et la composante quadratique ($I_q$) de courant.

4. Véhicule automobile équipé d'une machine électrique comportant un système de commande selon l'une des revendications 1 à 3.

5. Véhicule automobile selon la revendication 4, comprenant une transmission hybride munie en outre d'un moteur thermique.

6. Procédé de commande du couple électromagnétique d'une machine électrique (10) triphasée à aimants permanents, comprenant la mesure du courant délivré sur les trois phases de la machine électrique (10), une transposition des trois courants mesurés en une composante directe ($I_d$) et une composante quadratique ($I_q$) de courant à partir d'une transformée des systèmes triphasés, la réception de deux consignes ($I_{q\_req}$ et $I_{d\_req}$) pour la composante quadratique ($I_q$) et la composante directe ($I_d$) de courant dans le plan lié à la transformée des systèmes triphasés, une détermination des tensions de commande ($U_1$, $U_2$, $U_3$), et une commande des tensions à appliquer à la machine électrique (10), **caractérisé en ce que** la détermination des tensions de commande ($U_1$, $U_2$, $U_3$) comprend un changement de variable fournissant des variables de commande ($X_d$, $X_q$, $X_{q\_req}$, $X_{d\_req}$), une régulation de paramètres de commandes ($U_d$, $U_q$) calculés à partir d'un système d'équations exprimé en fonction des variables de commande ($X_d$, $X_q$, $X_{q\_req}$, $X_{d\_req}$), le système d'équations isolant les termes de perturbations ($P_d$, $P_q$) dues au flux généré par les aimants du rotor de la machine électrique (10) des termes contribuant au couple électromagnétique, et un calcul des tensions de commande ($U_1$, $U_2$, $U_3$) à partir des composantes directe et quadratique de tension ($V_d$, $V_q$) déterminées à partir des paramètres de commande ($U_d$, $U_q$).

7. Procédé selon la revendication 6, dans lequel la machine électrique (10) possède une symétrie entre l'axe direct et l'axe en quadrature du plan de la transformée des systèmes triphasés permettant d'obtenir une composante directe ($L_d$) d'inductance équivalente sensiblement équivalente à la composante quadratique ($L_q$) d'inductance équivalente.

8. Procédé selon l'une des revendications 6 ou 7, dans lequel la transformée des systèmes triphasés est une transformée de Park.

## Patentansprüche

1. Steuersystem (1) des elektromagnetischen Drehmoments einer dreiphasigen elektrischen Maschine (10) mit Dauermagneten, das Messeinrichtungen (2) des an den drei Phasen der Maschine (10) gelieferten Stroms, Umsetzungseinrichtungen (3), die ausgehend von einer Transformierten der dreiphasigen Systeme die drei gemessenen Ströme in eine direkte ($I_d$) und eine quadratische Stromkomponente ($I_q$) umsetzen können, Umwandlungseinrichtungen (4), die einen Drehmomentsollwert ($C_{em}^{req}$) in einen Sollwert ($I_q^{req}$) für die quadratische Stromkomponente ($I_q$) und einen Sollwert ($I_d^{req}$) für die direkte Stromkomponente ($I_d$) umwandeln können, Einrichtungen zur Bestimmung der Steuerspannungen ($U_1$, $U_2$, $U_3$) und Steuereinrichtungen (9) enthält, die die bestimmten Steuerspannungen ($U_1$, $U_2$, $U_3$) an die elektrische Maschine (10) anlegen können, **dadurch gekennzeichnet, dass** die Bestimmungseinrichtungen ein erstes Rechenmodul (5), das die direkten und quadratischen Stromkomponenten ($I_d$, $I_q$) sowie die Sollwerte ($I_{q\_req}$ und $I_{d\_req}$) empfängt, wobei das erste Rechenmodul (5) eine Änderung von Variablen anwenden und eine Einheit von Steuervariablen ($X_d$, $X_q$, $X_{q\_req}$, $X_{d\_req}$) an ein Regelungsmodul (6) liefern kann, das Parameter von Steuerungen ($U_d$, $U_q$) ausgeben kann, die ausgehend von einem Gleichungssystem abhängig von den Steuervariablen ($X_d$, $X_q$, $X_{q\_req}$, $X_{d\_req}$) berechnet werden, wobei das Gleichungssystem die Terme von Störungen ($P_d$, $P_q$) aufgrund des von den Magneten des Rotors der elektrischen Maschine (10) erzeugten Magnetstroms von den Termen isoliert, die zum elektromagnetischen Drehmoment beitragen, und ein zweites Rechenmodul (8) enthalten, das die Steuerspannungen ($U_1$, $U_2$, $U_3$) ausgehend von den direkten und quadratischen Spannungskomponenten ($V_d$, $V_q$) berechnen kann, die ausgehend von den Steuerparametern ($U_d$, $U_q$) bestimmt werden.

2. System nach Anspruch 1, wobei die elektrische Maschine (10) eine Symmetrie zwischen der direkten Achse und der Quadraturachse der Ebene der Transformierten der dreiphasigen Systeme besitzt, die es ermöglicht, eine direkte Komponente ($L_d$) äquivalenter Induktivität zu erhalten, die im Wesentlichen der quadratischen Komponente ($L_q$) äquivalenter Induktivität äquivalent ist.

3. System nach einem der Ansprüche 1 oder 2, das Umsetzungseinrichtungen (3) enthält, die eine Park-Transformierte an die gemessenen Ströme anwenden kann, um die direkte ($I_d$) und die quadratische Stromkomponente ($I_q$) zu erhalten.

4. Kraftfahrzeug, das mit einer elektrischen Maschine ausgestattet ist, die ein Steuersystem nach einem der Ansprüche 1 bis 3 aufweist.

5. Kraftfahrzeug nach Anspruch 4, das ein Hybridgetriebe enthält, das außerdem mit einem Wärmekraftmotor versehen ist.

6. Steuerverfahren des elektromagnetischen Drehmoments einer dreiphasigen elektrischen Maschine (10) mit Dauermagneten, das die Messung des an den drei Phasen der Maschine (10) gelieferten Stroms, eine Umsetzung der drei gemessenen Ströme in eine direkte ($I_d$) und eine quadratische Stromkomponente ($I_q$) ausgehend von einer Transformierten der dreiphasigen Systeme, den Empfang von zwei Sollwerten ($I_{q\_req}$ und $I_{d\_req}$) für die quadratische Stromkomponente ($I_q$) und die direkte Stromkomponente ($I_d$) in der mit der Transformierten der dreiphasigen Systeme verbundenen Ebene, eine Bestimmung der Steuerspannungen ($U_1$, $U_2$, $U_3$) und eine Steuerung der an die elektrische Maschine (10) anzulegenden Steuerspannungen enthält, **dadurch gekennzeichnet, dass** die Bestimmung der Steuerspannungen ($U_1$, $U_2$, $U_3$) eine Variablenänderung, die Steuervariablen ($X_d$, $X_q$, $X_{q\_req}$, $X_{d\_req}$) liefert, eine Regelung von Steuerparametern ($U_d$, $U_q$), die ausgehend von einem Gleichungssystem berechnet werden, das abhängig von den Steuervariablen ($X_d$, $X_q$, $X_{q\_req}$, $X_{d\_req}$) ausgedrückt wird, wobei das Gleichungssystem die Terme von Störungen ($P_d$, $P_q$) aufgrund des von den Magneten des Rotors der elektrischen Maschine (10) erzeugten Magnetstroms von den Termen isoliert, die zum elektromagnetischen Drehmoment beitragen, und eine Berechnung der Steuerspannungen ($U_1$, $U_2$, $U_3$) ausgehend von den direkten und quadratischen Spannungskomponenten ($V_d$, $V_q$) enthält, die ausgehend von den Steuerparametern ($U_d$, $U_q$) bestimmt werden.

7. Verfahren nach Anspruch 6, wobei die elektrische Maschine (10) eine Symmetrie zwischen der direkten Achse und der Quadraturachse der Ebene der Transformierten der dreiphasigen Systeme besitzt, die es ermöglicht, eine direkte Komponente ($L_d$) äquivalenter Induktivität zu erhalten, die im Wesentlichen der quadratischen Komponente ($L_q$) äquivalenter Induktivität äquivalent ist.

8. Verfahren nach einem der Ansprüche 6 oder 7, wobei die Transformierte der dreiphasigen Systeme eine Park-Transformierte ist.

## Claims

1. System (1) for controlling the electromagnetic torque of a permanent-magnet three-phase electric machine (10), comprising means (2) for measuring the current delivered across the three phases of the machine (10), transposition means (3) able to transpose the three currents measured into a direct component ($I_d$) and a quadratic component ($I_q$) of current on the basis of a transform of three-phase systems, transformation means (4) able to convert a torque setpoint ($C_{em}^{req}$) into a setpoint ($I_q^{req}$) for the quadratic component ($I_q$) of current and a setpoint ($I_d^{req}$) for the direct component ($I_d$) of current, means for determining the control voltages ($U_1$, $U_2$, $U_3$), and control means (9) able to apply the determined control voltages ($U_1$, $U_2$, $U_3$) to the electric machine (10), **characterized in that** the determination means comprise a first calculation module (5) receiving said direct and quadratic components ($I_d$, $I_q$) of current and also said setpoints ($I_{q\_req}$ and $I_{d\_req}$), the first calculation module (5) being able to apply a change of variables and to provide a set of control variables ($X_d$, $X_q$, $X_{q\_req}$, $X_{d\_req}$) to a regulation module (6) able to deliver control parameters ($U_d$, $U_q$) calculated on the basis of a system of equations as a function of the control variables ($X_d$, $X_q$, $X_{q\_req}$, $X_{d\_req}$), the system of equations isolating the disturbance terms ($P_d$, $P_q$) caused by the flux generated by the magnets of the rotor of the electric machine (10) from the terms contributing to the electromagnetic torque, and a second calculation module (8) able to calculate the control voltages ($U_1$, $U_2$, $U_3$) on the basis of the direct and quadratic components of voltage ($V_d$, $V_q$) determined on the basis of the control parameters ($U_d$, $U_q$).

2. System according to Claim 1, wherein the electric machine (10) has a symmetry between the direct axis and the quadrature axis of the plan of the transform of three-phase systems, making it possible to obtain a direct component ($L_d$) of equivalent inductance substantially equivalent to the quadratic component ($L_q$) of equivalent inductance.

3. System according to either of Claims 1 and 2, comprising transposition means (3) able to apply a Park's transform to the currents measured in order to obtain the direct component ($I_d$) and the quadratic component ($I_q$) of current.

4. Motor vehicle equipped with an electric machine comprising a control system according to one of Claims 1 to 3.

5. Motor vehicle according to Claim 4, comprising a hybrid transmission also equipped with a heat engine.

6. Method for controlling the electromagnetic torque of a permanent-magnet three-phase electric machine (10), comprising the measurement of the current delivered across the three phases of the electric machine (10), a transposition of the three currents measured into a direct component ($I_d$) and a quadratic component ($I_q$) of current on the basis of a transform of three-phase systems, the receipt of two setpoints ($I_{q\_req}$ and $I_{d\_req}$) for the quadratic component ($I_q$) and the direct component ($I_d$) of current in the plan associated with the transform of three-phase systems, a determination of the control voltages ($U_1$, $U_2$, $U_3$) and a control of the voltages to be applied to the electric machine (10), **characterized in that** the determination of the control voltages ($U_1$, $U_2$, $U_3$) comprises a change of variable providing the control variables ($X_d$, $X_q$, $X_{q\_req}$, $X_{d-req}$), a regulation of control parameters ($U_d$, Uq) calculated on the basis of a system of equations expressed as a function of the control variables ($X_d$, $X_q$, $X_{q\_req}$, $X_{d\_req}$), the system of equations isolating the disturbance terms ($P_d$, $P_q$) caused by the flux generated by the magnets of the rotor of the electric machine (10) from the terms contributing to the electromagnetic torque, and a calculation of the control voltages ($U_1$, $U_2$, $U_3$) on the basis of the direct and quadratic components of voltage ($V_d$, $V_q$) determined on the basis of the control parameters ($U_d$, $U_q$).

7. Method according to Claim 6, wherein the electric machine (10) has a symmetry between the direct axis and the quadrature axis of the plan of the transform of three-phase systems, making it possible to obtain a direct component ($L_d$) of equivalent inductance substantially equivalent to the quadratic component ($L_q$) of equivalent inductance.

8. Method according to either of Claims 6 and 7, wherein the transform of three-phase systems is a Park's transform.

# FIG.1

110 —⌐ Mesure des courants de la machine

120 —⌐ Transformée de Park

130 —⌐ Réception des consignes $I_{d\_req}$ et $I_{q\_req}$

140 —⌐ Changement de variable

150 —⌐ Régulation $U_d$ et $U_q$

160 —⌐ Détermination de $V_d$ et $V_q$

170 —⌐ Transformée inverse de Park

180 —⌐ Applications des tensions à la machine

# FIG.2

**RÉFÉRENCES CITÉES DANS LA DESCRIPTION**

**Documents brevets cités dans la description**

- FR 2919772